# EUROPEAN PATENT APPLICATION

(11) **EP 1 800 932 A1**
(43) Date of publication of application: **27.06.2007**
(21) Application number: 05780414.8
(22) Date of filing: 22.08.2005
(51) Int. Cl.: B60K 35/00, G01C 21/00, B60R 16/02

(54) **SIMULATION APPARATUS, SIMULATION PROGRAM, AND SIMULATION METHOD**

(30) Priority: 24.08.2004 JP 2004244406
(71) Applicant: SHARP KABUSHIKI KAISHA, Osaka-shi, Osaka 545-8522 (JP)
(72) Inventor: OKAMOTO, Toshiya, Kyoto 619-0237 (JP); FUJIMOTO, Fumiaki, Nara 631-0077 (JP); YODA, Kazuhiko, Nara 630-0114 (JP)
(74) Representative: Brown, Kenneth Richard
(86) International application number: PCT/JP2005/015214
(87) International publication number: WO 2006/022228

(57) **Abstract**

A simulation device of the present invention includes: a display section (21) which is mounted on a vehicle and displays, as an instrument panel image, driving information including vehicle state information such as the speed of the vehicle and engine revolutions and additional information such as a navigation image; a layout generation section (11) that generates layout information of the instrument panel image displayed on the display section (21); and an information processing section (22) that determines the layout of the instrument panel image with reference to the layout information generated by the layout generation section (11) and the aforesaid driving information. Since the display section (21) displays the instrument panel image with the layout determined by the information processing section (22), it is possible to carry out simulation close to actual driving feel.

## Description

### TECHNICAL FIELD

The present invention relates to a simulation device for constructing an application development support tool which supports the development of a process (application) to determine the layout of an instrument panel image in case where vehicle state information such as the speed and engine revolutions and additional information for assisting the driver, such as a navigation image, are displayed on an instrument panel of a vehicle.

### BACKGROUND ART

Automotive display devices have recently been proposed by, for example, a publicly-known document 1 (Japanese Laid-Open Patent Application No. 9-123848; published on May 13, 1997). The automotive display devices display, on an instrument panel of a car, additional information such as a navigation image for assisting the driver, in addition to vehicle state information such as the speed and engine revolutions.

According to the publicly-known document 1, easy and smooth driving is achieved by displaying for the driver desired information corresponding to the running state, on a wide display.

The layout of an image displayed on an instrument panel (hereinafter, instrument panel image) must be variously changed in consideration of the type of a vehicle and the user's preference. For example, a publicly-known document 2 (Japanese Laid-Open Patent Application No. 10-297319; published on November 10, 1998) discloses an instrument panel image selection device which allows the user to optionally select an instrument panel image.

The layout of an instrument panel image must typically be determined in a cautious manner for safety reasons, for example. For this reason, it is necessary to finally determine the layout after sufficient consideration on each of proposed layouts. This applies to the aforementioned publicly-known documents 1 and 2, too.

However, the look of the instrument panel in a case where simulation is carried out when the instrumental panel image is displayed in line with a predetermined layout may be different from the look of the instrument panel when the vehicle is actually running.

Such a difference between the case of the simulation and the case of the actual driving may cause safety problems.

There has therefore been demand for an application development support tool with which the look of an instrument panel image does not change between the simulation and the actual driving, i.e. an application development support tool which can carry out suitable simulation close to actual driving feel.

### DISCLOSURE OF INVENTION

The present invention was done to solve the problem above, and the objective of the present invention is to provide a simulation device for realizing an application development support tool that can carry out suitable simulation close to actual driving feel.

The present invention is characterized as a simulation device for checking a state of image display on an in-vehicle display device which combines images corresponding to sets of vehicle information supplied from respective devices mounted on a vehicle so as to display a composite image, the in-vehicle display device storing plural sets of layout information each of which indicates positions of the images in the composite image, the simulation device including: image storing means for storing the images corresponding to contents of the sets of vehicle information; and obtaining means for obtaining, with reference to at least one set of vehicle information supplied from outside, images corresponding to said at least one set of vehicle information, from the image storing means, the in-vehicle display device displaying the composite image based on the images selected by the obtaining means, the layout information, and said at least one set of vehicle information.

Said at least one vehicle information supplied from the outside is preferably generated by a vehicle simulator which simulates operations of the devices mounted on the vehicle.

Said at least one set of vehicle information supplied from the outside is preferably generated by a device mounted on the vehicle.

The simulation device is preferably further provided with: operation means for receiving user input; layout information generating means for generating the layout information based on the user input; and transmission means for transmitting, to the in-vehicle display device, the layout information generated by the layout information generating means.

The simulation device is preferably further provided with test image storing means for storing plural patterns of test images; and composite test data storing means for storing composite test data corresponding to data of a combination of the test images, the obtaining means obtaining, based on said at least one vehicle information supplied from the outside, a test image corresponding to said at least one vehicle information, from the test image storing means, and the in-vehicle display device displaying the composite image based on the test image selected by the obtaining means, the layout information, and said at least one vehicle information, the simulation device further including: comparing means for comparing the composite image displayed by the in-vehicle display device with the composite test data stored in the composite test data storage means; and notifying means for notifying the user of a result of comparison by the comparing means.

The present invention may be characterized as a simulation device for checking a state of image display on an in-vehicle display device which combines images corresponding to sets of vehicle information supplied from respective devices mounted on a vehicle so as to display a composite image, the in-vehicle display device storing plural sets of layout information each of which indicates positions of the images in the composite image, the simulation device including: image storing means for storing the images corresponding to contents of the sets of vehicle information; vehicle information generating means for generating at least one set of vehicle information in a simulated manner; and obtaining means for obtaining, with reference to said at least one set of vehicle information generated by the vehicle information generating means, images corresponding to said at least one set of vehicle information, from the image storing means, the in-vehicle display device displaying the composite image based on the images selected by the obtaining means, the layout information, and said at least one set of vehicle information.

The present invention is directed not only to the simulation device but also to a program and the method used for the same.

### BRIEF DESCRIPTION OF DRAWINGS

Fig. 1 relates to an embodiment of the present invention and is a block diagram showing the substantial part of an application development support tool.
Fig. 2 illustrates an example of images displayed on a display section of the instrument panel of Fig. 1.
Fig. 3 is a block diagram showing the substantial part of an information processing section of the instrument panel of Fig. 1.
Fig. 4 is a block diagram showing a specific example of the application development support tool of Fig. 1.
Fig. 5 shows an example of how a layout manager is displayed by the layout generation section of Fig. 4.
Fig. 6 shows the flow of the operation to set a layout, which is determined by the application development support tool of Fig. 4.
Fig. 7(a) shows an example of images displayed on the display section of the instrument panel, when the vehicle is running.
Fig. 7(b) shows an example of images displayed on the display section of the instrument panel, when the vehicle has stopped.
Fig. 7(c) shows an example of images displayed on the display section of the instrument panel, when the vehicle is going back.
Fig. 8 is a block diagram which outlines a display system of a car, to which the application development support tool of the present embodiment is applied.
Fig. 9 schematically shows an example of a simulation device of the present invention.
Fig. 10 schematically shows another example of the simulation device of the present invention.
Fig. 11 schematically shows a further example of the simulation device of the present invention.
Fig. 12 schematically shows yet another example of the simulation device of the present invention.

### BEST MODE FOR CARRYING OUT THE INVENTION

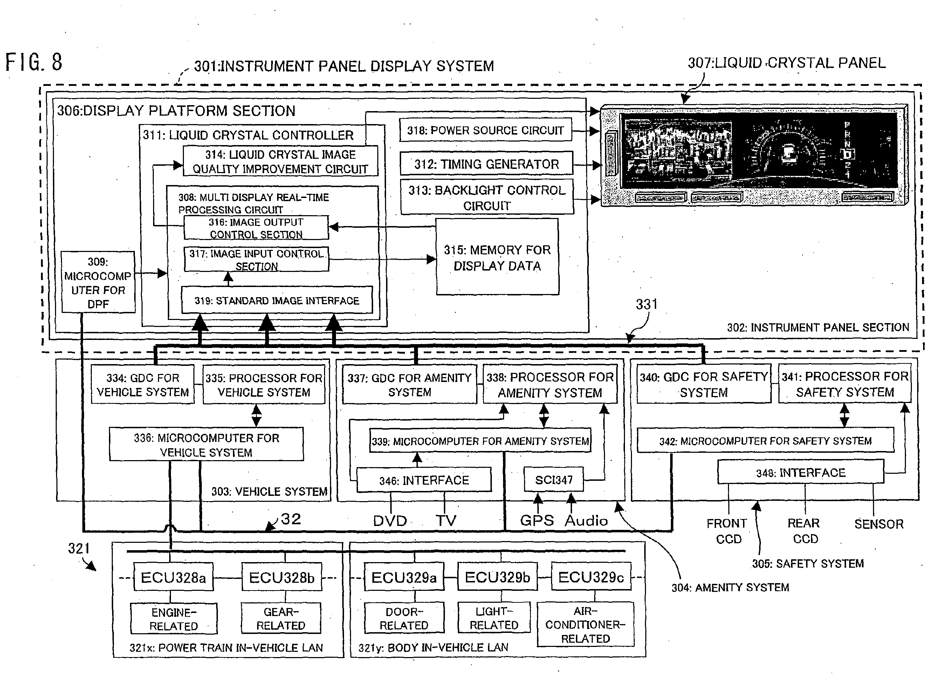

A display system shown in Fig. 8 has been proposed to display various types of information on an instrument panel of a car. This display system displays a composite image which is generated by combining images generated based on respective sets of information supplied from plural devices such as a speedometer, a tachometer, and a car navigation device. The following will discuss the display system of Fig. 8.

The display system includes an instrument panel display system 301, a vehicle system 303, an amenity system 304, a safety system 305, a power train in-vehicle LAN 321x, and a body in-vehicle LAN 321y. The power train in-vehicle LAN 321x generates information indicating the states of the engine, gears, or the like and outputs the generated information to the vehicle system 303. The body in-vehicle LAN 321y generates information indicating the states of doors, lights, an air conditioner, or the like and outputs the generated information to the vehicle system 303.

The vehicle system 303 generates image data, based on driving information supplied from the power train in-vehicle LAN 321x and the body in-vehicle LAN 321. The vehicle system 303 also generates layout information indicating the positions of images based on the image data in the composite image, with reference to the driving information supplied from the power train in-vehicle LAN 321x and the body in-vehicle LAN 321y.

The amenity system 304 is connected to devices such as a DVD player, a television set, GPS, and an audio set, and generates image data based on driving information supplied from those connected devices. The amenity system 304 also generates layout information indicating the positions of images based on the image data in the composite image, with reference to driving information indicating the states of the engine and gears, which information is supplied via the vehicle system 303.

The safety system 305 is connected to devices such as a CCD for filming around the vehicle and a sensor for sensing the distance to an obstacle around the vehicle. Based on driving information supplied from those connected devices, the safety system 305 generates image data. Also, the safety system 305 generates layout information indicating the positions of images based on the image data in the composite image, with reference to the driving information regarding the engine, gears, and the like, which information is supplied via the vehicle system 303.

The instrument panel display system 301 displays the composite image with reference to the image data and layout information which are supplied from the vehicle system 303, the amenity system 304, and the safety system 305. As described above, the display system shown in Fig. 8 generates the image data by using plural microcomputers. The display system can therefore reduce a burden on each microcomputer, as compared to a display system in which all sets of image data are generated and combined by a single microcomputer.

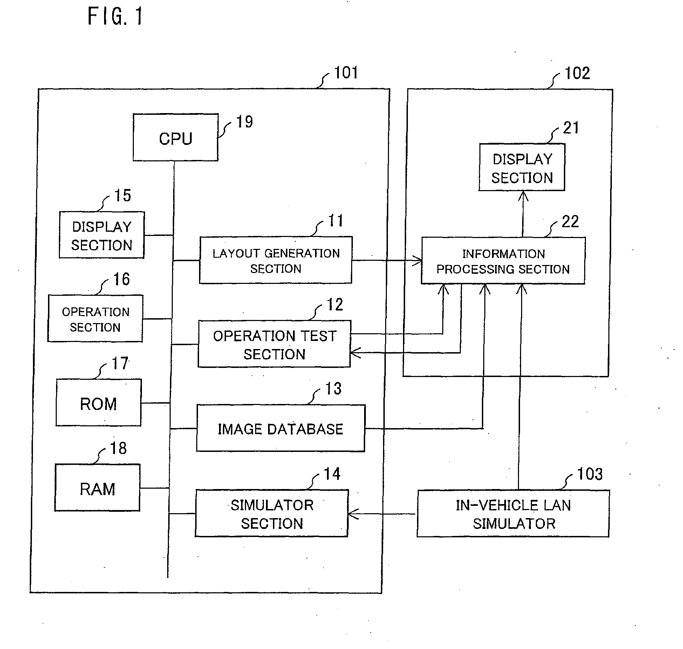

The application development support tool of the present invention is used for checking the display condition of the instrument panel display system 301, and has three functions as below. Firstly, the application development support tool has a first function for setting or changing the layout of a composite image in an instrument panel display system such as the system shown in Fig. 8. Secondly, the application development support tool has a second function for checking the image display condition of the composite image with the layout thus set. Finally, the application development support tool has a third function by which a comparison with test data which has been stored in advance is carried out to check the image display condition of the composite image, and the comparison result is displayed. Details of the application development support tool will be given below with reference to figures. Fig. 1 is a block diagram showing the application development support tool.

As shown in Fig. 1, the application development support tool of the present embodiment includes a personal computer 101 (hereinafter, PC) for generating display simulation information, an instrument panel 102 which displays images based on the generated display simulation information, and an in-vehicle LAN (Local Area Network) simulator 103 for providing information required for generating the display simulation information.

That is to say, the above-described application development support tool is a tool (simulation device) that determines the layout of an instrument panel image on the instrument panel 102 based on display simulation information (layout information) generated by the PC 101 and driving information (including vehicle state information such as speed and engine revolutions and additional information such as a navigation image) from an in-vehicle LAN simulator 103, and carries out display simulation.

The PC 101 includes following software modules: a layout generation section 11 as a layout manager module for performing the first function; an operation test section 12 as a soft diagnosis module for performing the third function; an image database 13; and a simulator section 14 as a simulator module for performing the second function. The PC 101 further includes: a display section 15 for displaying the operation state of each module; an operation section 16 for operating each module; a ROM 17 that stores a program for the process carried out by each module; a RAM 18 which functions as a working space for processing the program; and a CPU 19 which functions as control means for controlling the above-described sections.

The layout generation section 11 operates when the first function is carried out, and is a software module that can display, on the display section 15, an image which looks identical to the image on the instrument panel 102 as an actual device (integrated panel). The layout generation section 11 generates layout information required for determining the layout of the instrument panel image. The generated layout information is supplied to the instrument panel 102. The instrument panel 102 stores the layout information.

The operation test section 12 operates when the third function is carried out. The operation test section 12 is a software module which downloads operation data which is image data based on which an image is displayed on the instrument panel 102, carries out a comparison with test data so as to test the actual operation, uploads the result of the operation test to the CPU 19, and causes the display section 15 to display the operation state (i.e. to display defected parts).

The image database 13 stores real-time image data corresponding to an image which is actually displayed. Examples of image data include road conditions filmed by a CCD (Charge Coupled Device) camera, an animated image of the speedometer, and an image of car navigation. Any formats may be used for the image data, e.g. MPEG2, MPEG4, MotionJPEG, and AVI. Real-time images (live-action images) taken by means for capturing real-time images may be displayed.

The simulator section 14 operates when the second function is performed, and is a software module which obtains an image stored in the image database 13, in accordance with the driving information supplied from the in-vehicle LAN simulator 103.

When the first function is carried out, the layout information generated by the layout generation section 11 of the aforesaid PC 101 is supplied to the instrument panel 102. When the third function is carried out, image data stored in the image database 13 is supplied to the instrument panel 102. When the second function is carried out, the soft diagnosis data of the operation test section 12 is supplied to the instrument panel 102.

The instrument panel 102 corresponds to the instrument panel display system 1 shown in Fig. 8. The instrument panel 102 stores the layout information generated by the layout generation section 11 and includes: a display section 21 which displays, as an additional image, information assisting the driving such as a navigation image, in addition to the vehicle state information such as the speed of the vehicle and engine revolutions; and an information processing section 22 which processes information to be displayed on the display section 21.

More specifically, the instrument panel 102 is a hardware module made up of a liquid crystal panel as the display section 21 and a liquid crystal controller as the information processing section 22. When the second function is carried out, the instrument panel 102 selects, with reference to the driving information supplied from the in-vehicle LAN simulator 103, a set of layout information stored in the information processing section 22, generates data of a composite image based on the layout information and the image data supplied from the PC 101, and displays the generated composite image.

Also, the instrument panel 102 has a function to download the layout information from the PC 101 so as to update the layout information, and a function to receive soft diagnosis data from the PC 101 so as to upload a result of check of the operation state of the instrument panel 102 to the PC 101.

The in-vehicle LAN simulator 103 functions as driving information generating means for generating simulated driving information to be displayed on the display section 21 of the instrument panel 102. Such driving information is made up of vehicle state information such as the speed of the vehicle and engine revolutions, additional information such as a navigation image, and the like.

The in-vehicle LAN simulator 103 is not a prerequisite. Any types of information sources may be used on condition that information similar to that supplied from the in-vehicle LAN simulator 103 can be supplied. Also, actual information may be obtained from a vehicle on which the PC 101 and the instrument panel 102 are actually mounted.

In other words, the driving information may be directly obtained from an actual vehicle, or may be generated in a simulated manner by using the aforesaid in-vehicle LAN simulator 103 which is the driving information generating means.

For example, in case where the layout is determined with reference to driving information directly obtained from an actual vehicle, it is possible to display an instrument panel image which is close to actual driving feel.

On the contrary, in case where the layout is determined by using the driving information generated in a simulated manner by the aforesaid in-vehicle LAN simulator 103, it is possible to carry out various types of simulations with little time and effort as compared to the case where the driving information is directly obtained from an actual vehicle.

In both cases, it is possible to display, on the display section 21 of the instrument panel 102, an instrument panel image which is closer to actual driving feel than an image generated solely by simulation in a computer.

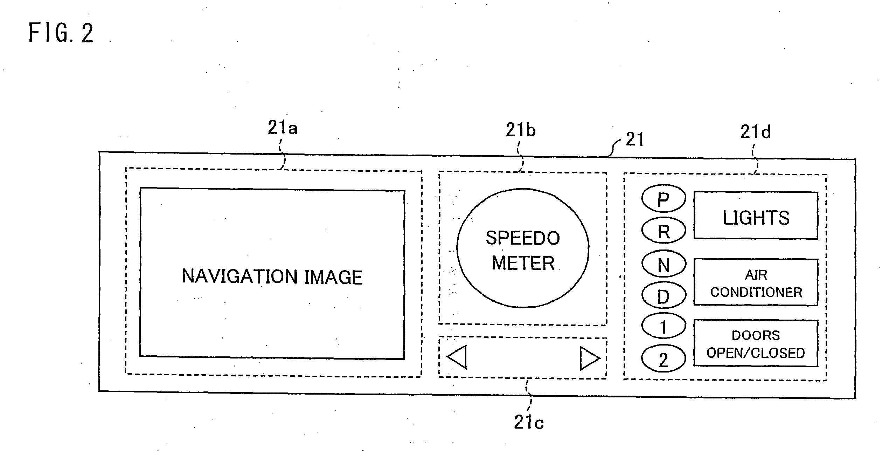

The display section 21 displays, on a single panel, a composite image in which plural images are combined. As shown in Fig. 2, for example, the display section 21 is provided with four display areas (first display area 21a to fourth display area 21d) for displaying different sets of information.

In the present embodiment, the first display area 21 a displays a navigation image or a television image as additional information, the second display area 21b displays an image of power train information (the speed of the vehicle, engine revolutions, and the like) as vehicle state information, the third display area 21c displays power train information such as an image of a blinking direction indicator, which is different from the information displayed on the second display area 21b, and the fourth display area 21 d displays vehicle body information such as an image indicating if the doors are open/closed and an image indicating if the lights are turned on/off, and the like.

The sets of information displayed on the respective display areas of the display section 21 are supplied from the PC 101 via the information processing section 22.

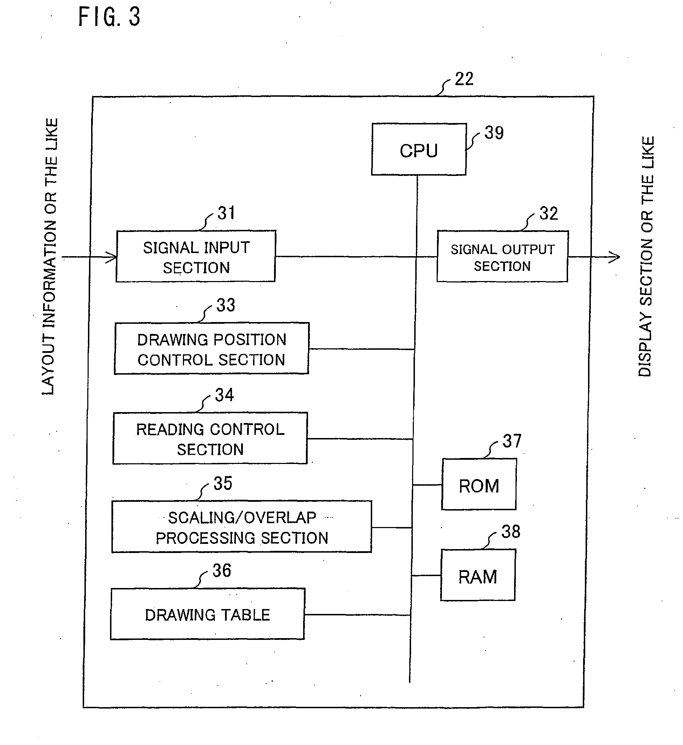

As shown in Fig. 3, for example, the information processing section 22 includes: a signal input section 31 to which image data from the PC 101 and driving information from the in-vehicle LAN simulator are supplied; and a signal output section 32 which outputs the data of the generated composite image to the display device 21 or the like.

The information processing section 22 is further provided with: a drawing position control section 33 which is control means for controlling the order of preference of positions and display of the areas on the display section 21; a reading control section 34 which is control means for reading out the layout information stored in a drawing table 36; a scaling/overlap processing section 35 which is control means for controlling the scaling/overlap/translucency of images displayed on the display section 21; a drawing table 36 which stores the layout information supplied from the PC 101; a ROM 37 which stores programs of the processes performed by the information processing section 22; a RAM 38 which is a working space where a program read out from the ROM 37 is executed; and a CPU 39 which is control means for controlling the above-described sections.

The above-described information processing section 22 functions as layout determination means for determining the layout of the instrument panel image displayed on the display section 21, based on the stored layout information and the driving information supplied from the in-vehicle LAN simulator 103, and also functions as a graphic controller which causes the display section 21 to display the instrument panel image with the determined layout.

The information for the image display, which information is supplied from the information processing section 22, is sent to the display section 21 via a screen frame buffer (not illustrated).

The drawing table 36 may store layout information supplied from the PC 101 or layout information which has been optionally set before the shipment by the automobile manufacturer.

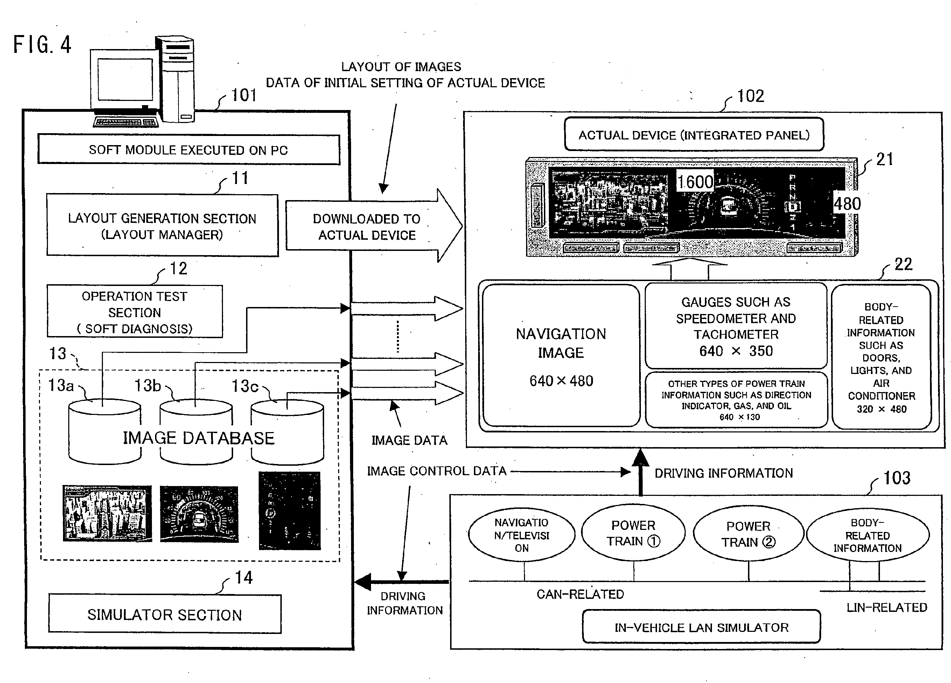

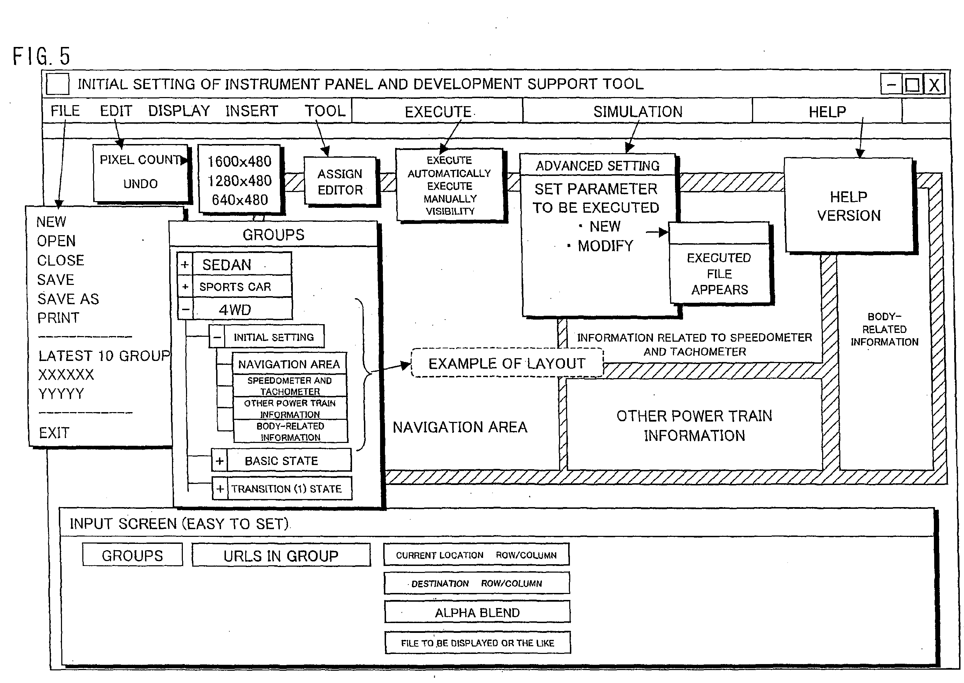

The following will describe a specific example of the above-described application support tool with reference to Figs. 4 and 5. First, the layout information generating process which is the first function will be discussed. Fig. 5 illustrates an image displayed by the PC 101 at the time of generating layout information.

As shown in Fig. 4, the PC 101 includes, as soft modules, the layout generation section 11, the operation test section 12, and the simulator section 14. The PC 101 is also provided with the image database 13.

The image database 13 includes: a first image storage section 13a which stores navigation image data for the first display area 21a of the display section 21 of the instrument panel 102; a second image storage section 13b which stores power train image data for the second and third display areas 21b and 21c; and a third image storage section 13c which stores body image data for the fourth display area 21d.

Sets of image data stored in those storage sections are supplied to the instrument panel 102, as need arises.

The PC 101 is provided with the layout generation section 11 for generating layout information that relates to the screen layout of the instrument panel image to be displayed on the display section 21 of the instrument panel 102. As the layout generation section 11, a layout manager shown in Fig. 5 is used, for example.

A programmer of an application uses the layout manager shown in Fig. 5, and inputs by using the operation section 16 conditions of layout information of a screen layout of an instrument panel image in each state. There are four states of the instrument panel image as follows: an initial setting state (a state in which the instrument panel 102 is turned on); a basic state (a state of the instrument panel 102 when the vehicle is running as usual); a transition (1) (a state of the instrument panel 102 when a motorbike approaches to the running vehicle); and a transition (N) (a state of the instrument panel 102 when a navigation system or the like is being used. More specifically, drawing positions of images displayed on the instrument panel 102 are set and/or modified, a device which is the target of drawing is set, and vertical and horizontal pixels are set. In other words, the original size and the size of the drawing target are set. Based on the input conditions, the layout generation section 11 of the PC 101 generates the layout information.

The layout information generated by the layout generation section 11 is supplied to the instrument panel 11 which is an actual device. The layout information supplied to the instrument panel 102 is stored in the drawing table 36 (see Fig. 3) of the information processing section 22. With this, the first function, i.e. the layout information generation process finishes. This is the end of the explanation of the first function.

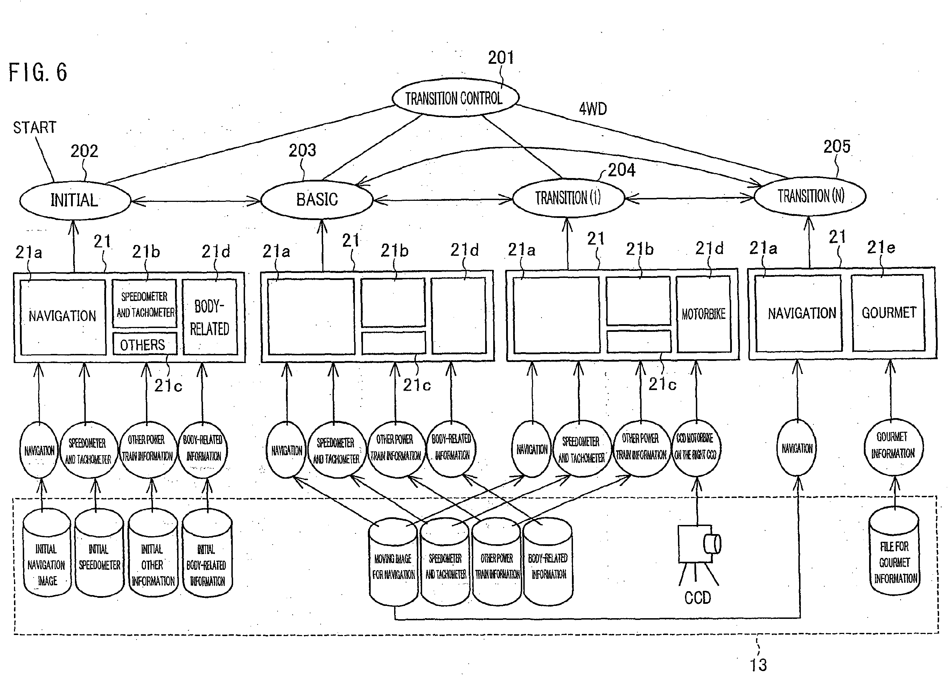

Now, the following will discuss the second function, i.e. a simulation process. Fig. 6 shows how transition of images is conducted when the simulation process is carried out. The upper part of Fig. 6 is a flowchart showing the transition on the instrument panel 102, and this flowchart is executed as software by the simulator 14 of the PC 101. In other words, the upper part of Fig. 6 shows that the displayed images transit along the arrows, and take one of an initial state 202, a basic state 203, a transition (1) state 204, and a transition (N) state 205, in accordance with the driving information supplied from the in-vehicle LAN simulator 103. The transition is controlled by a transition control 201. The middle part of Fig. 6 shows the arrangement of images on the instrument panel 102, in each state. The lower part of Fig. 6 shows images required in each state.

As the display section 21 of the instrument panel 102, a horizontally-long liquid crystal display panel with 1600 dots in width and 480 dots in height (1600x480) is used. In this panel, the first display area 21a has the size of 640×480, the second display area 21b has the size of 640x350, the third display area 21c has the size of 640x 130, and the fourth display area 21d has the size of 320×480.

The first display area 21a displays a navigation image. The second display area 21b displays gauges such as a speedometer and tachometer. The third display area 21c displays other power train information such as a direction indicator, gas, and oil. The fourth display area 21 d displays body information in regard of doors, lights, an air conditioner, and the like.

Based on the image data supplied from the PC 101, the driving information supplied from the in-vehicle LAN simulator 103, and the layout information stored in the drawing table 36, the aforesaid images are displayed on the display section 21 by the information processing section 22 functioning as a graphic controller.

The images displayed on the respective display areas above are obtained by the simulator section 14 from the image database 13 of the PC 101. The image database 13 includes: a first image storage section 13a storing navigation images to be displayed on the first display area 21 a; a second image storage section 13b storing power train images displayed on the second and third display areas 21b and 21c; and a third image storage section 13c storing body images displayed on the fourth display area 21d.

The images stored in the image database 13 are switched by the simulator section 14, based on the driving information supplied from the in-vehicle LAN simulator 103. That is to say, the simulator section 14 judges the state of the vehicle (e.g. the vehicle stops or is running) based on the driving information, obtains an appropriate image from the image database 13 to display on the instrument panel 102 the image corresponding to the state of the vehicle, and outputs the obtained image to the instrument panel 102. In other words, the driving information indicates the operation state data of the vehicle supplied from the vehicle LAN simulator 103, and, based on this driving information, an image supplied from the PC 101 to the instrument panel 102, which is an actual device, of the vehicle is switched. The PC 101 detects the timing to switch an image from the driving information, switches an image or a real-time image supplied from the image database 13, and displays the switched image on the instrument panel 102.

The aforesaid real-time image is, for example, an image supplied from an in-vehicle CCD camera.

While the second function, i.e. the simulation process is being carried out, the in-vehicle LAN simulator 103 sends the driving information to the PC 101 side and also sends the driving information to the instrument panel 102.

The in-vehicle LAN simulator 103 includes: a navigation/television simulation section which simulates a navigation image displayed on the display section 21 of the instrument panel 102; a power train (1) simulation section which simulates display images such as a speedometer and tachometer displayed on the display section 21; a power train (2) simulation section which simulates display images such as a direction indicator; and a body simulation section which simulates images indicating if the doors are open/closed and the lights are switched on/off.

Those sections are connected to a CAN (Controller Area Network) which is a control-related network, and the body simulation section among the aforesaid sections is connected to a LIN (Local Interconnect Network) of a body-related network. In other words, the aforesaid sections output in real-time, as driving information, information similar to the information obtained in a case where the devices in a vehicle actually operate. This makes it possible to obtain information similar to information obtained from an actual vehicle.

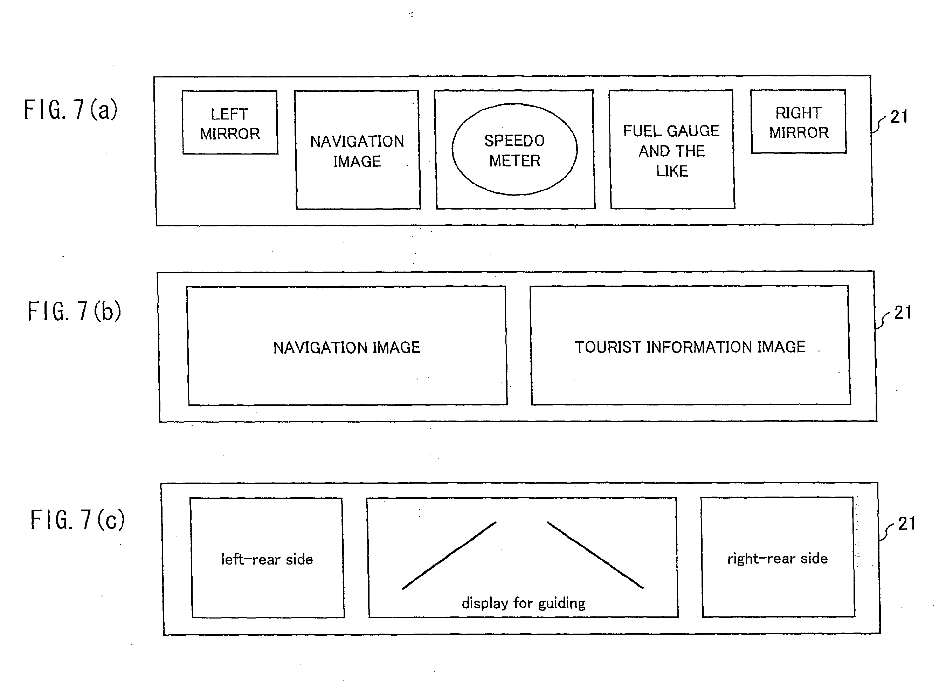

It is therefore possible to cause the display section 21 to display an instrument panel image closer to actual driving feel, by obtaining, from the above-described in-vehicle LAN simulator 103, driving information required for determining the layout. The following will describe an example of transition of images on the instrument panel 102, with reference to Fig. 7. Fig. 7 shows screen configurations of the instrument panel 102 in the basic state, transition (1) state, and transition (M) state. More specifically, Fig. 7(a) shows an example of the layout of the instrument panel image when the vehicle is running. This example is characterized in that, in the display section 21, images obtained by mirror CCD (Charged Coupled Device) cameras are displayed on the both sides, in addition to the navigation image, speedometer, and the like. Fig. 7(b) shows an example of the layout of an instrument panel image when the vehicle has stopped. This example is characterized in that the display section 21 displays only a navigation image and a tourist information image. Fig. 7(c) shows an example of the layout of an instrument panel image when the vehicle is going back. This example is characterized in that, in order to assist the vehicle to go back, an image from a CCD camera provided at the center rear of the vehicle is displayed at the center of the display section 21, whereas images supplied from a right-rear CCD camera and a left-rear CCD camera are displayed on the respective sides of the image from the center rear side. The following will describe how the system operates when images are switched from those shown in Fig. 7(a) to those shown in Fig. 7(b) to those shown in Fig. 7(c).

The following will discuss the operation of the system when the images shown in Fig. 7(a) are displayed. Based on the driving information supplied from the in-vehicle LAN simulator 103, the simulator section 14 obtains image data from the image database 13. More specifically, the in-vehicle LAN simulator 103 outputs, to the simulator section 14, driving information corresponding to usual running, with the assumption that the vehicle is running as usual. With reference to the information regarding the speedometer in the driving information, the simulator section 14 determines that the vehicle is running, and obtains from the image database 13 the image data corresponding to the basic state. In the case shown in Fig. 7(a), the images of the left mirror, navigation screen, speedometer, gas information or the like, and right mirror are displayed. The simulator section 14 therefore obtains those images from the image database 13 and outputs the obtained images to the instrument panel 102.

The information processing section 22 of the instrument panel 102 displays the composite image shown in Fig. 7(a), based on the image data supplied from the simulator section 14, the driving information supplied from the in-vehicle LAN simulator 103, and the stored layout information. More specifically, the information processing section 22 judges the state of the vehicle with reference to the information regarding the speedometer in the driving information supplied form the in-vehicle LAN simulator 103, so as to specify the layout information corresponding to the state. In the present case, the information processing section 22 judges that the vehicle is in the basic state, and hence the information processing section 22 obtains the layout information corresponding to the basic state, combines sets of image data with reference to the layout information, and displays the composite image of Fig. 7(a) on the display section 21.

The following will describe in what manner the system operates when the transition to the images shown in Fig. 7(b) is carried out. Based on the driving information supplied from the in-vehicle LAN simulator 103, the simulator section 13 obtains image data from the image database 13. More specifically, the in-vehicle LAN simulator 103 outputs to the simulator section 14 the driving information corresponding to the transition (N) (stop state), with the assumption that the vehicle has stopped. The simulator section 14 judges that the vehicle is in the transition (N) state (stop state) with reference to the information regarding the speedometer in the driving information, and obtains from the image database 13 the image data corresponding to the basic state. Since the navigation image and the tourist information image are displayed in the case of Fig. 7(b), the simulator section 14 obtains these images from the image database 13 and outputs them to the instrument panel 102.

The information processing section 22 of the instrument panel 102 displays the composite image shown in Fig. 7(b), based on the image data supplied from the simulator section 14, the driving information supplied from the in-vehicle LAN simulator 103, and the stored layout information. More specifically, the information processing section 22 judges the state of the vehicle with reference to the information regarding the speedometer in the driving information supplied from the in-vehicle LAN simulator 103, so as to specify the layout information corresponding to the state. In the present case, judging that the vehicle is in the transition (N) state (stop state), the information processing section 22 obtains the layout information corresponding to the transition (N) state, combines sets of image data with reference to the layout information, and displays the composite image of Fig. 7(b) on the display section 21.

Now, the following will describe in what manner the system operates when the transition to the images shown in Fig. 7(c) is carried out. Based on the driving information supplied from the in-vehicle LAN simulator 103, the simulator section 14 obtains image data from the image database 13. More specifically, the in-vehicle LAN simulator 103 outputs to the simulator 14 the driving information corresponding to the transition (M), with the assumption that the vehicle goes back. With reference to the information regarding the shift position in the driving information, the simulator section 14 judges that the vehicle is in the transition (M) state and obtains from the image database 13 the image data corresponding to the basic state. Since the left-rear side, rear side, and right-rear side are displayed in Fig. 7(c), the simulator section 14 obtains these images from the image database 13 and outputs the images to the instrument panel 102.

The information processing section 22 of the instrument panel 102 displays the composite image shown in Fig. 7(c), based on the image information supplied from the simulator section 14, the driving information supplied from the in-vehicle LAN simulator 103, and the stored layout information. More specifically, with reference to the information regarding the shift position in the driving information supplied from the in-vehicle LAN simulator 103, the information processing section 22 judges the state of the vehicle and specifies the layout information corresponding to the state. In the present case, judging that the vehicle is in the transition (M) state (backing state), the information processing section 22 obtains the layout information corresponding to the transition (M) state, combines sets of image data with reference to the layout information, and displays the composite image of Fig. 7(c) on the display section 21. As a result of the above-described operation, the images displayed on the display section 22 of the instrument panel 102 are switched. This is the end of the explanation of the second function.

Now, the third function, i.e. the comparison process will be discussed with reference to Fig. 4. In the comparison process, the PC 101 judges if an image is correctly displayed on the display section 22 of the instrument panel 102.

First, the in-vehicle LAN simulator 103 outputs driving information for test to the instrument panel 102 and the PC 101. The operation test section 12 of the PC 101 obtains test data from the image database 13, with reference to the supplied driving information for test. The operation test section 12 further obtains from the image database 13 the image data corresponding to the driving information for test, and outputs the obtained image data to the instrument panel 102. The test data is used as a reference for the judgment of whether an image is correctly displayed on the instrument panel 102.

The information processing section 22 of the instrument panel 102 displays a composite image for test on the display section 21, based on the driving information for test, the image data, and the layout information. On this occasion, the data of the composite image is supplied to the operation test section 12 from the line memory of the display section 21 of the instrument panel 102. With this, the operation test section 12 obtains the data of the composite image.

Receiving the data of the composite image, the operation test section 12 compares the data of the composite image with the test data, and displays the result of the comparison on the display section 15. More specifically, in case where the data of the composite image is identical with the test data, the display section 15 displays that those sets of data are identical to each other. In case where the sets of data are not identical to each other, the display section 15 displays that those sets of data are not identical to each other. This is the end of the explanation of the third function.

As described above, the above-described application development support tool is arranged in such a manner that driving information is supplied in a simulated manner so that a composite image is generated, and the composite image is displayed on the instrument panel 102. This makes it possible to check how an image is displayed, before the instrument panel 102 is mounted on a vehicle. In other words, it is possible to check an instrument panel image which is close to actual driving feel, before the instrument panel 102 is mounted on a vehicle.

With this, it is possible to reduce the difference in the look of instrument panel images between a case where the instrument panel image is displayed in line with a predetermined layout while simulation is carried out and a case where the instrument panel image is displayed in line with a predetermined layout while the vehicle actually runs. It is therefore possible to prevent the safety hazard on account of the difference in the look of instrument panel images between the simulation and actual driving.

To set the layout of an instrument panel image displayed by the aforesaid instrument panel 102, the following method may be adopted: all sets of image data regarding driving information are supplied to the PC 101 and the images are directly sent to the display section 21 without the intermediary of the information processing section 22 which is a graphic controller used in the above.

In this method, however, since the information processing section 22 (graphic controller) is not used, the image to be evaluated may be slightly different from the image supplied to the display section 21 by using the information processing section 22. Because the actual instrument panel 102 must input an image to the display section 21 via the information processing section 22, the evaluation by the aforesaid method may be insufficient. On this account, the method may all the more induce delay in the development.

In consideration of the above, the present invention provides an application development support tool which is characterized by including: a display section 21 constituting an instrument panel 102; an information processing section 22 which is a graphic controller that receives layout information and plural sets of image information so as to generate an image displayed on the display section 21; a PC 101 that can generate and change the layout information; and an in-vehicle LAN simulator 103 which is an information source capable of outputting the plural image data.

Using such an application development support tool, it is possible to correct the layout of images displayed on the display section 21 only by correcting the layout information on the PC 101. Also, the time for the development can be reduced because how images are displayed can be checked only by changing the layout information on the PC 101, even in case where the system is actually mounted on a vehicle and the information is supplied from the instrument panel 102 as an actual device.

The PC 101 may have not only the layout information but also simulation information (which is a generic term of a tool for dynamically changing the layout, e.g. checking of positional overlap, tones, brightness, contrasts, and changes in y correction values of respective colors of RGB, and automatic change of the layout). The PC 101 may also have soft diagnosis information (which is a tool to which a test pattern can be input, used for, for example, evaluation of a changed layout or the like by using the test pattern).

In case where the tones of the respective colors of RGB can be changed by the PC 101, it is possible to determine to what extent tone correction is carried out, without correcting the image which is the information source. This makes it easy to determine the tone correction values.

Since the above-described arrangement makes it easy to change the layout information as if the system is actually mounted to a vehicle, the time for the development can be reduced.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

The members of the application development support tool and processing steps in accordance with the aforesaid embodiment can be realized by a CPU or other computing means executing a computer program contained in a ROM (Read Only Memory), RAM, or other storage means to control a keyboard or like input means, a display device or like output means, or an interface circuit or like communications means. Therefore, the various functions and processes of the application development support tool of the present embodiment can be realized if a computer equipped with these means simply reads a storage medium containing the program and executing the program. In addition, if the program is contained in a removable storage medium, the various functions and processes can be realized on any given computer.

Such a computer program storage medium may be a memory (not shown), such as a ROM, so that the process is executable on a microcomputer. Alternatively, a program medium may be used which can be read by inserting the storage medium in an external storage device (program reader device; not shown).

In addition, in either of the cases, it is preferable if the contained program is accessible to a microprocessor which will execute the program. Further, it is preferable if the program is read and then downloaded to a program storage area of a microcomputer where the program is executed. Assume that the program for download is stored in a main body device in advance.

In addition, the program medium is a storage medium arranged so that it can be separated from the main body. Examples of such a program medium include a tape, such as a magnetism tape and a cassette tape; a magnetism disk, such as a flexible disk and a hard disk; a disc, such as a CD/MO/MD/DVD; a card, such as an IC card (inclusive of a memory card); and a semiconductor memory, such as a mask ROM, an EPROM (erasable programmable read only memory), an EEPROM (electrically erasable programmable read only memory), or a flash ROM. All these storage media holds a program in a fixed manner.

In addition, if the system is configured to be connectible to a communications network, such as the Internet, it is preferred that the storage medium contains the program in a flowing manner like downloading the program over the communications network.

Further, to download the program over the communications network, it is preferred if the program for download is stored in a main body device in advance or installed from another storage medium.

In the embodiment above, the instrument panel 102 stores the layout information. The layout information, however, may not be stored in the instrument panel 12, as details are given below.

In the embodiment above, the layout information generated by the layout generation section 11 is stored in the instrument panel 102. Also, to perform the simulation process, the instrument panel 102 specifies the layout information to be used based on the driving information, and sets of image data are combined based on the specified layout information so that the resultant composite image is displayed.

On the contrary, there is a system of another embodiment, in which the layout information is stored in the PC 101. In this system, the layout information generated by the first function, i.e. the layout information generation process is stored in the PC 101. In other words, it is not required to supply the layout information to the instrument panel 102. Subsequently, in the simulation process, the simulator 14 selects a suitable set of layout information from the stored sets of layout information, based on the driving information, and obtains suitable image data from the image database 13. The simulator 14 then supplies the layout information and image data to the instrument panel 102. In response, the information processing section 22 of the instrument panel 102 generates a composite image based on the layout information and image data, and displays the composite image on the display section 21. With this, the system of said another embodiment makes it possible to display the composite image in the same manner as the system of the aforesaid embodiment. The system of said another embodiment may also be provided with the third function.

As described above, an application development support tool of the present invention, which supports development of an application for executing display simulation of display means which is mounted on a vehicle and displays, as an instrument panel image, driving information including vehicle state information such as a speed of the vehicle and engine revolutions and additional information such as a navigation image, is characterized by including: layout information generating means for generating layout information of the instrument panel image displayed by the display means; and layout determination means for determining a layout of the instrument panel image, based on the layout information generated by the layout information generating means and the driving information, the display means displaying the instrument panel image with the layout determined by the layout determination means.

According to this arrangement, since the layout of the instrument panel image is determined in consideration of the driving information including the vehicle state information such as the speed of the vehicle and engine revolutions and the additional information such as the navigation image, it is possible to cause the instrument panel image to appear close to actual driving feel.

With this, it is possible to reduce the difference in the look of instrument panel images between a case where simulation is carried out so that the instrument panel image is displayed in line with a predetermined layout (i.e. simulation) and a case where the instrument panel image is displayed in line with a predetermined layout while the vehicle actually runs (i.e. actual driving). It is therefore possible to prevent the safety hazard on account of the difference in the look of instrument panel images between the simulation and actual driving.

An instrument panel of the vehicle may be constituted by the display means and the layout determining means.

In this case, since the operation can be checked and evaluated on the instrumental panel side mounted on the vehicle, it is possible to carry out simulation closer to actual driving feel.

The driving information may be directly obtained from an actual vehicle or generated in a simulated manner.

For example, in case where the layout is determined with reference to driving information obtained from an actual vehicle, it is possible to display an instrument panel image closer to actual driving feel.

On the other hand, in case where the layout is determined with reference to driving information generated in a simulated manner as above, it is possible to carry out various types of simulation without time and effort, as compared to the case where the driving information is obtained directly from an actual vehicle.

A display simulation method of the present invention, which is for an instrument panel which is mounted on a vehicle and displays, as an instrument panel image, driving information including vehicle state information such as a speed of the vehicle and engine revolutions and additional information such as a navigation image, is characterized by including the steps of: (i) generating layout information of the instrument panel image; (ii) determining a layout of the instrument panel image, based on the layout information generated in the step (i) and the driving information; and (iii) displaying the instrument panel image with the layout determined in the step (ii).

A display simulation program of the present invention, which is for an instrument panel which is mounted on a vehicle and displays, as an instrument panel image, driving information including vehicle state information such as a speed of the vehicle and engine revolutions and additional information such as a navigation image, may cause a computer to execute the procedures of: (i) generating layout information of the instrument panel image; (ii) determining a layout of the instrument panel image, based on the layout information generated in the step (i) and the driving information; and (iii) displaying the instrument panel image with the layout determined in the step (ii).

The display simulation program may be stored in a computer-readable storage medium.

The present invention may be the following simulation programs and simulation methods.

In a simulation program of the present invention, which causes a computer to check a state of image display on an in-vehicle display device which combines images corresponding to sets of vehicle information supplied from respective devices mounted on a vehicle so as to display a composite image, provided that the in-vehicle display device stores plural sets of layout information each of which indicates positions of the images in the composite image, and the simulation device stores the images corresponding to contents of the sets of vehicle information, the simulation program may cause a computer to execute the procedures of: (i) obtaining, based on at least one vehicle information supplied from the outside, images corresponding to said at least one vehicle information, from the simulation device; and displaying the composite image on the in-vehicle display device, based on the images obtained in the procedure (i), the layout information, and said at least one vehicle information.

In a simulation program of the present invention, which causes a computer to check a state of image display on an in-vehicle display device which combines images corresponding to sets of vehicle information supplied from respective devices mounted on a vehicle so as to display a composite image, provided that the in-vehicle display device stores plural sets of layout information each of which indicates positions of the images in the composite image, and the simulation device stores the images corresponding to contents of the sets of vehicle information, the simulation program may cause a computer to execute the procedures of: (i) generating at least one vehicle information in a simulated manner; (ii) obtaining, based on said at least one vehicle information generated in the procedure (i), images corresponding to said at least one vehicle information, from the simulation device; and displaying the composite image on the in-vehicle display device, based on the images obtained in the procedure (ii), the layout information, and said at least one vehicle information.

A simulation method of the present invention, which is for checking a state of image display on an in-vehicle display device which combines images corresponding to sets of vehicle information supplied from respective devices mounted on a vehicle so as to display a composite image, the in-vehicle display device storing plural sets of layout information each of which indicates positions of the images in the composite image, may include the steps of: (i) storing the images corresponding to contents of the sets of vehicle information; (ii) obtaining, with reference to at least one set of vehicle information supplied from outside, images corresponding to said at least one set of vehicle information; and (iii) displaying the composite image on the in-vehicle display device, based on the images obtained in the step (ii), the layout information, and said at least one set of vehicle information.

A simulation method of the present invention, which is for checking a state of image display on an in-vehicle display device which combines images corresponding to sets of vehicle information supplied from respective devices mounted on a vehicle so as to display a composite image, the in-vehicle display device storing plural sets of layout information each of which indicates positions of the images in the composite image, may include the steps of: (i) storing the images corresponding to contents of the sets of vehicle information; (ii) generating at least one vehicle information in a simulated manner; (iii) obtaining, with reference to said at least one set of vehicle information generated in the step (ii), images corresponding to said at least one set of vehicle information; and (iv) displaying the composite image on the in-vehicle display device, based on the images obtained in the step (iii), the layout information, and said at least one set of vehicle information.

In the following examples, the simulation device (see Fig. 8) of the present invention is materialized.

### (Example 1)

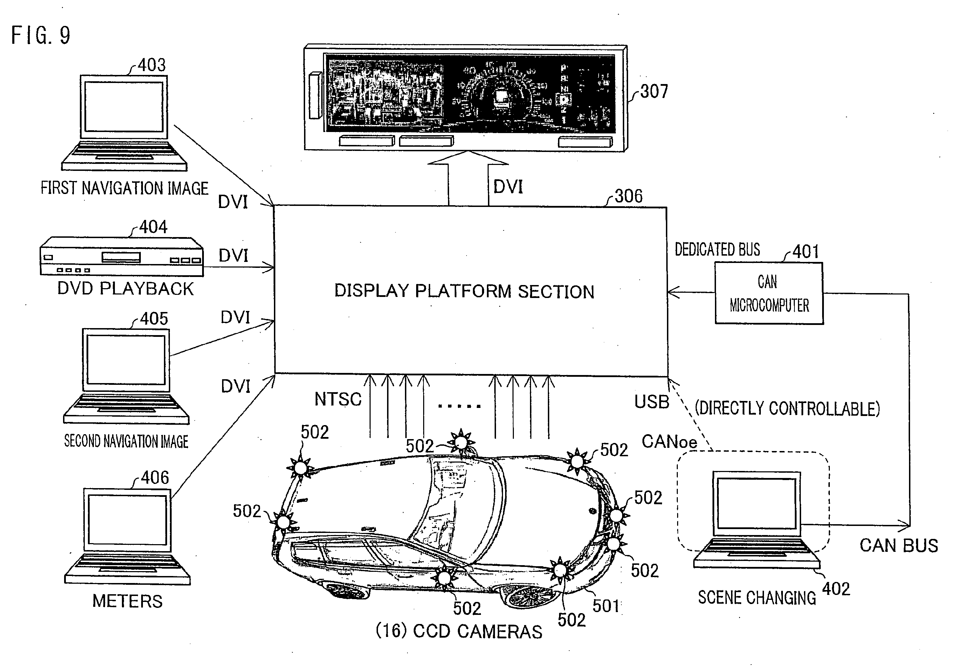

The following will describe an example of the present invention with reference to Fig. 9.

Fig. 9 outlines the application development support tool of the present example. In Fig. 9, details of the display platform section 306 and the liquid crystal panel 307 are not given because these members are identical to those in Fig. 8.

A CAN microcomputer 401 corresponds to the DPF microcomputer 309 in Fig. 8, and is connected to a display platform section 306 by means of a dedicated BUS. To this CAN microcomputer 401, a scene-changing PC 402 is connected by means of a CANBUS.

As scene numbers, the scene-changing PC 402 supplies, to the CAN microcomputer 401, sets of information corresponding to respective layouts shown in, for example, Figs. 7(a)-7(c). The CAN microcomputer 401 supplies to the display platform section 306 the scene numbers supplied from the scene-changing PC 402, without making any changes thereto.

Without the intermediary of the CAN microcomputer 401, the scene-changing PC 402 may be connected to the display platform section 306 by USB (Universal Serial Bus) or the like, in order to directly control the display platform section 306.

The display platform section 306 is further connected, by DVI, to a PC 403 for first navigation image, a DVD (Digital Versatile Disc) player 404, a PC 405 for second navigation image, and PC 406 for meters.

The PC 403 for first navigation image generates detailed information in regard of a navigation image and sends the generated information to the display platform section 306. The detailed information includes, for example, a detailed map and availability of restaurants and amusement facilities.

The DVD player 404 plays back a DVD disc and sends the obtained information to the display platform section 306.

The PC 405 for second navigation image generates simplified information of a navigation screen and sends the generated information to the display platform section 306. The simplified information is arranged so that, for example, the traveling direction at a cross road is easily recognizable.

The PC 406 for meters generates at once meter information for displaying needles of various meters such as a speedometer and a tachometer on the liquid crystal panel 307, and sends the generated information to the display platform section 306.

In this way, based on the sets of information supplied from the respective PCs, the display platform section 306 generates contents (images and their layout) to be displayed on the liquid crystal panel 307, and sends the generated information to the DVI-connected liquid crystal panel 307.

In addition to the above, the display platform section 306 receives video information (NTSC (National Television System Committee) signals) from CCD cameras 502 mounted on the vehicle 501. The display platform section 306 displays the supplied video information on the liquid crystal panel 307, as circumstances demand. Plural CCD cameras 502 are provided both inside and outside of the vehicle 501, e.g. in case where there are 16 cameras, 8 cameras are provided inside the vehicle and 8 cameras are provided outside the vehicle. With those CCD cameras 502, images taken inside and outside the vehicle are supplied to the display platform section 306, and displayed on the liquid crystal panel 307 as circumstances demand.

The scene changing operation by the scene-changing PC 402 is manually carried out. In other words, the user operates the scene-changing PC 402 so as to change the scenes.

The aforesaid PCs and input devices operate asynchronously. Sets of information supplied from the respective PCs and input devices are independently supplied to the display platform section 306.

In the application support tool shown in Fig. 9, the aforesaid display platform section 306 activates a layout generation program stored in a built-in flash memory (not illustrated), and displays on the liquid crystal panel 307 an instrument panel image simulated based on various sets of information that have been asynchronously supplied.

### (Example 2)

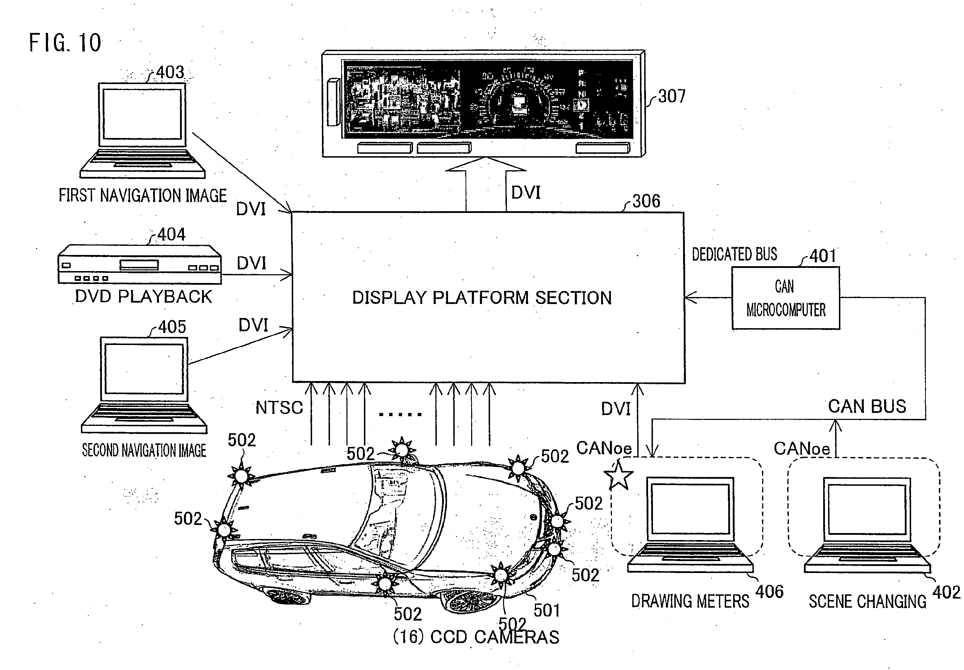

The following will discuss another example of the present invention with reference to Fig. 10.

Fig. 10 outlines the application development support tool of the present example. The present example is different from the above-described example 1 in that the PC 406 for meters is connected to the CAN microcomputer 401 via a CANBUS. On this account, the PC 406 for meters draws meters with reference to a scene-changing signal supplied to the scene-changing PC 402 which is also connected to the CANBUS.

On this account, meters corresponding to a scene can be drawn for the liquid crystal panel 307, and hence it is possible to obtain a simulation result close to a result obtained by an actual vehicle.

### (Example 3)

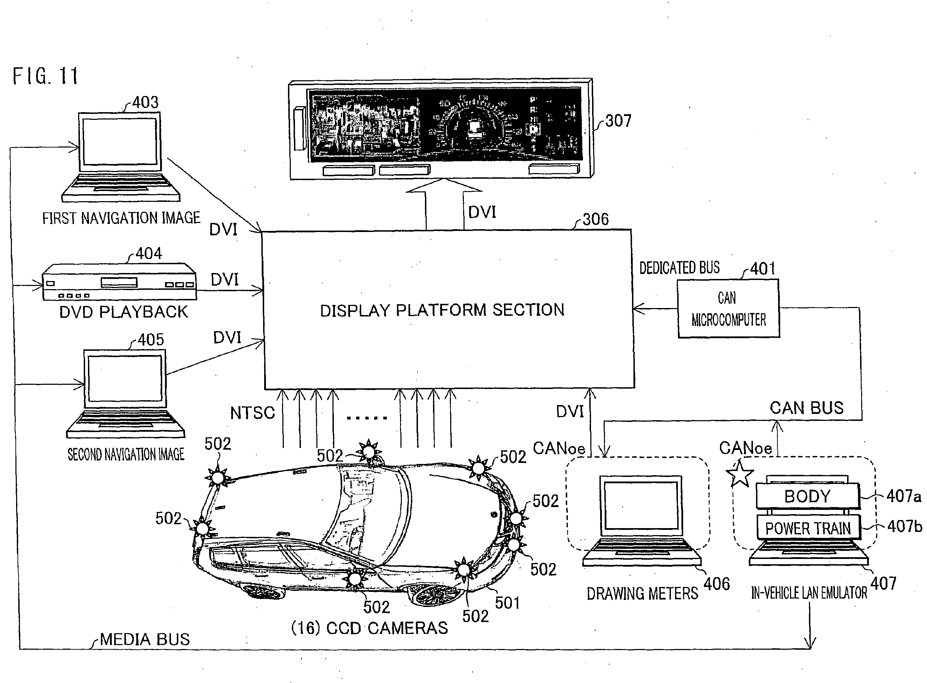

The following will discuss a further example of the present invention with reference to Fig. 11.

Fig. 11 outlines the application development support tool of the present example. The present example is different from the above-described example 2 in that an in-vehicle LAN emulator 407 is connected to the CANBUS instead of the scene-changing PC 402, and also the in-vehicle LAN emulator 407, the PC 403 for first navigation image, the DVD player 404, and the PC 405 for second navigation image are connected to one another via a media bus.

The in-vehicle LAN emulator 407 is constituted by: a body simulation section 407a corresponding to the body in-vehicle LAN 321y in Fig. 8; a power train simulation section 407b corresponding to the power train in-vehicle LAN 321x in Fig. 8; and the like. The in-vehicle LAN emulator 407 sends sets of information generated in the respective simulation sections to the CAN microcomputer 401 via the CANBUS. The in-vehicle LAN emulator 407 also sends the sets of information to the PC 406 for meters. In addition, the in-vehicle LAN emulator 407 sends the sets of information to the PC 403 for first navigation image, the DVD player 404, and the PC 405 for second navigation image, via the media bus.

As a result, on account of the information generated by the in-vehicle LAN emulator 407, the following operations cooperate with each other: drawing of meters by the PC 406 for meters; generation of a navigation screen by the PC 403 for first navigation image; DVD playback by the DVD player 404; and generation of a navigation image by the PC 405 for second navigation image. It is therefore possible to conduct simulation close to actual driving of a vehicle.

### (Example 4)

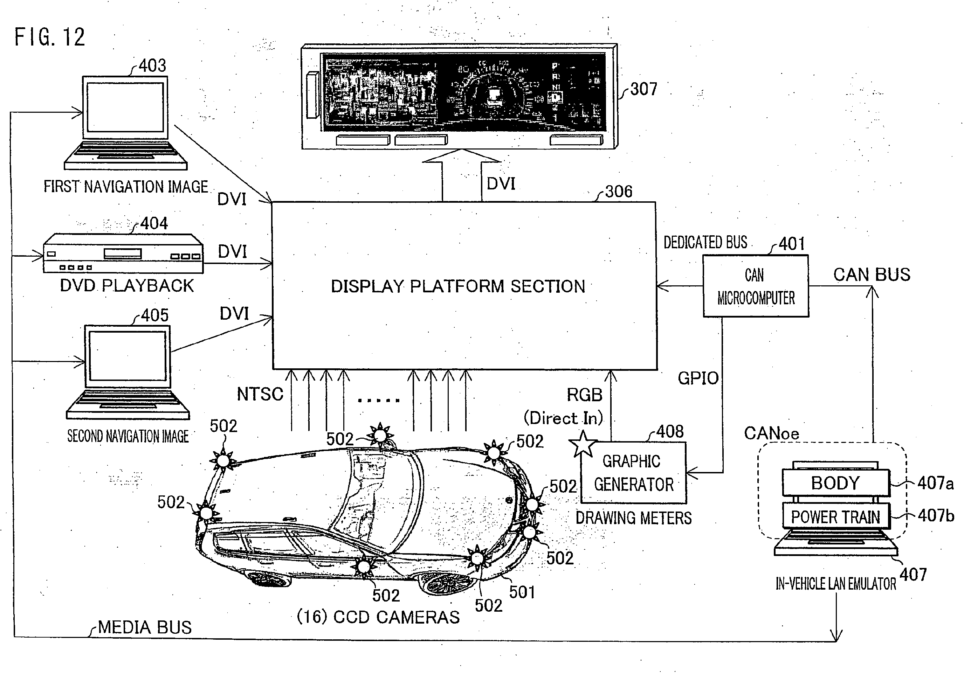

The following will discuss yet another example of the present invention with reference to Fig. 12.

Fig. 12 shows the outline of the application development support tool of the present example. The different between the present example and the example 3 is in that, in place of the PC 406 for meters, a graphic generator 408 is connected to the CAN microcomputer 401 via GPIO (General-Purpose Input/ Output) and also connected to the display platform section 306 by RGB.

Since the aforesaid graphic generator 408 is specialized for drawing meters, its ability to draw meters is not different from that of the PC 406 for meters.

The effect of the present example is more or less identical with that of the aforesaid example 3.

### INDUSTRIAL APPLICABILITY

The simulation device of the present invention makes it possible to conduct simulation of an instrument panel to be mounted on a vehicle, which simulation is close to actual driving feel. The simulation device of the present invention can therefore be used as an application development support tool for vehicles such as cars and trains, if the vehicles require simulations.

## Claims

1. A simulation device for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image,
the simulation device comprising:
image storing means for storing the images corresponding to contents of the sets of vehicle information; and
obtaining means for obtaining, with reference to at least one set of vehicle information supplied from outside, images corresponding to said at least one set of vehicle information, from the image storing means,
the in-vehicle display device displaying the composite image based on the images selected by the obtaining means, the layout information, and said at least one set of vehicle information.

2. The simulation device as defined in claim 1,
wherein, said at least one vehicle information supplied from the outside is generated by a vehicle simulator which simulates operations of the devices mounted on the vehicle.

3. The simulation device as defined in claim 1,
wherein, said at least one set of vehicle information supplied from the outside is generated by a device mounted on the vehicle.

4. The simulation device as defined in claim 1, further comprising:
operation means for receiving user input;
layout information generating means for generating the layout information based on the user input; and
transmission means for transmitting, to the in-vehicle display device, the layout information generated by the layout information generating means.

5. The simulation device as defined in claim 1, further comprising:
test image storing means for storing plural patterns of test images; and
composite test data storing means for storing composite test data corresponding to data of a combination of the test images,
the obtaining means obtaining, based on said at least one vehicle information supplied from the outside, a test image corresponding to said at least one vehicle information, from the test image storing means, and
the in-vehicle display device displaying the composite image based on the test image selected by the obtaining means, the layout information, and said at least one vehicle information,
the simulation device further comprising:
comparing means for comparing the composite image displayed by the in-vehicle display device with the composite test data stored in the composite test data storage means; and
notifying means for notifying the user of a result of comparison by the comparing means.

6. A simulation device for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image,
the simulation device comprising:
image storing means for storing the images corresponding to contents of the sets of vehicle information;
vehicle information generating means for generating at least one set of vehicle information in a simulated manner; and
obtaining means for obtaining, with reference to said at least one set of vehicle information generated by the vehicle information generating means, images corresponding to said at least one set of vehicle information, from the image storing means,
the in-vehicle display device displaying the composite image based on the images selected by the obtaining means, the layout information, and said at least one set of vehicle information.

7. A simulation program which is executed on a simulation device for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image, and
the simulation device storing the images corresponding to contents of the sets of vehicle information,
the program comprising the step of:
(i) obtaining, with reference to at least one set of vehicle information supplied from outside, images corresponding to said at least one set of vehicle information, from the simulation device,
the in-vehicle display device displaying the composite image based on the images obtained in the step (i), the layout information, and said at least one set of vehicle information.

8. A simulation program which is executed on a simulation device for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image, and
the simulation device storing the images corresponding to contents of the sets of vehicle information,
the program comprising the steps of:
(i) generating at least one vehicle-information in a simulated manner; and
(ii) obtaining, with reference to said at least one set of vehicle information generated in the step (i), images corresponding to said at least one set of vehicle information, from the simulation device,
the in-vehicle display device displaying the composite image based on the images obtained in the step (ii), the layout information, and said at least one set of vehicle information.

9. A simulation method for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image,
the method comprising the steps of:
(i) storing the images corresponding to contents of the sets of vehicle information; and
(ii) obtaining, with reference to at least one set of vehicle information supplied from outside, images corresponding to said at least one set of vehicle information,
the in-vehicle display device displaying the composite image based on the images obtained in the step (ii), the layout information, and said at least one set of vehicle information.

10. A simulation method for checking a state of image display on an in-vehicle display device which combines images corresponding to sets of vehicle information supplied from respective devices mounted on a vehicle so as to display a composite image,
the in-vehicle display device storing plural sets of layout information each of which indicates positions of the images in the composite image,
the method comprising the steps of:
(i) storing the images corresponding to contents of the sets of vehicle information;
(ii) generating at least one set of vehicle information in a simulated manner; and
(iii) obtaining with reference to said at least one set of vehicle information generated in the step (ii), images corresponding to said at least one set of vehicle information,
the in-vehicle display device displaying the composite image based on the images obtained in the step (iii), the layout information, and said at least one set of vehicle information.

11. An application development support tool which supports development of an application for executing display simulation of display means which is mounted on a vehicle and displays, as an instrument panel image, driving information including vehicle state information such as a speed of the vehicle and engine revolutions and additional information such as a navigation image,
the application development support tool comprising:
layout information generating means for generating layout information of the instrument panel image displayed by the display means; and
layout determination means for determining a layout of the instrument panel image, based on the layout information generated by the layout information generating means and the driving information,
the display means displaying the instrument panel image with the layout determined by the layout determination means.

12. The application development support tool as defined in claim 11,
wherein, the display means and the layout determining means constitute an instrument panel of the vehicle.

13. The application development support tool as defined in claim 11, further comprising driving information generating means for generating the driving information in a simulated manner.

14. A display simulation method for an instrument panel which is mounted on a vehicle and displays, as an instrument panel image, driving information including vehicle state information such as a speed of the vehicle and engine revolutions and additional information such as a navigation image,
the method comprising the steps of:
(i) generating layout information of the instrument panel image;
(ii) determining a layout of the instrument panel image, based on the layout information generated in the step (i) and the driving information; and
(iii) displaying the instrument panel image with the layout determined in the step (ii).

15. A display simulation program for an instrument panel which is mounted on a vehicle and displays, as an instrument panel image, driving information including vehicle state information such as a speed of the vehicle and engine revolutions and additional information such as a navigation image,
the program causes a computer to execute the procedures of:
(i) generating layout information of the instrument panel image;
(ii) determining a layout of the instrument panel image, based on the layout information generated in the step (i) and the driving information; and
(iii) displaying the instrument panel image with the layout determined in the procedure (ii).

16. A computer-readable storage medium, storing the program set forth in claim 15.
